# EUROPÄISCHE PATENTSCHRIFT

(11) **EP 0 856 668 B1**
(45) Veröffentlichungstag und Bekanntmachung des Hinweises auf die Patenterteilung: **27.03.2002**
(21) Anmeldenummer: 97121684.1
(22) Anmeldetag: 09.12.1997
(51) Int. Cl.: F16B 5/06

(54) **Verbindungselement aus Kunststoff**
Plastic fastener
Dispositif de fixation en plastique

(30) Priorität: 29.01.1997 DE 29701469 U
(43) Veröffentlichungstag der Anmeldung: 05.08.1998
(73) Patentinhaber: TRW Automotive Electronics & Components GmbH & Co. KG, 78315 Radolfzell (DE)
(72) Erfinder: Kraus, Willibald, 67269 Grünstadt (DE)
(74) Vertreter: Schieschke, Klaus, Dipl.-Ing.

(56) Entgegenhaltungen:
- EP-A- 0 735 283
- DE-A- 4 334 926
- DE-U- 29 701 469
- US-A- 1 864 080

## Beschreibung

Die Erfindung bezieht sich auf ein Verbindungselement aus Kunststoff mit einem mit einem Träger, insbesondere einer Kraftfahrzeugkarosserie, zu verbindenden Befestigungsbereich und einem Anschlag- und/oder Haltebereich, wobei der Anschlagbereich über mehrere, über den Umfang verteilte, elastische Arme mit einem mit dem Befestigungsbereich versehenen Grundkörper verbunden ist.

Als Stand der Technik ist bereits ein derartiges Verbindungselement bekannt (DE 43 34 926 A1), bei welchem der Haltebereich und der Befestigungsbereich durch mindestens zwei elastische Arme zum Toleranzausgleich in den in einer Trägerebene liegenden Richtungen verbunden sind. Vorzugsweise finden drei elastische Arme Anwendung, welche spiralförmig verlaufen. Durch diese bekannte Konstruktion ist hauptsächlich in einer Ebene, nämlich der Trägerebene, ein guter Toleranzausgleich gewährleistet.

Weitere bekannte Konstruktionen zum Toleranzausgleich sind ein einstückiges Kunststoff-Befestigungselement (DE-AS 22 27 163), ein Befestigungselement für formsteife Kraftfahrzeug-Innenverkleidungen (DE 31 00 270 A1), ein Abstandshalter für Platten, insbesondere Leiterplatten (DE 38 12 093 A1) und eine Verbindung zwischen einem Träger und einem Plattenelement aus drei einzelnen Teilen (DE 40 14 589 C1). Diese bekannten Konstruktionen sind entweder kostenaufwendig gestaltet und/oder ermöglichen lediglich einen Toleranzausgleich in einer Ebene.

Weiterhin zählt eine Konstruktion zum Stand der Technik, welche dazu dient, auftretende Vibrationen oder Stoßbeanspruchungen aufzufangen (US-A-1,864,080). Hierzu ist in einem zylindrischen Hohlkörper, welcher mit Gummimasse gefüllt ist, ein Kolben eingebettet. Damit werden Stöße oder Vibrationen, welche auf den Grundkörper einwirken nicht oder nur in sehr geringem Maße auf den Kolben übertragen. Diese bekannte Konstruktion ist nicht geeignet, einen Toleranzausgleich zwischen einem Träger und einem Plattenelement herzustellen.

Ausgehend von dem eingangs genannten Stand der Technik liegt der vorliegenden Erfindung die Aufgabe zugrunde, ein Verbindungselement zu schaffen, bei welchem auch in der senkrecht zu der Trägerebene liegenden Achse über einen weiten Bereich ein guter Toleranzausgleich erzielbar ist.

Diese Aufgabe wird erfindungsgemäß mit den Merkmalen im kennzeichnenden Teil des Anspruchs 1 gelöst. Dadurch, dass erfindungsgemäß eine Kolbenzylindereinheit, welche mit dem kompressiblen Medium gefüllt ist, den Grundkörper bildet, lässt sich der Kolben und damit entweder der Anschlagbereich oder der Befestigungsbereich in den Zylinder gegen Wirkung des kompressiblen Mediums hineindrücken, so dass auch in einer senkrecht zur Trägerebene liegenden Ebene ein Toleranzausgleich sowie eine gute Unterstützung auf einfache Weise ermöglicht wird.

Der Anschlagbereich besteht aus einem zylinderförmigen Lagerkörper und einem stirnseitig daran angeordneten Anschlagkörper, wobei der Lagerkörper über die elastischen Arme mit dem Kolben der Kolbenzylindereinheit verbunden oder selbst Teil des Kolbens ist.

Der Kolben und die ihm zugeordnete Innenwandung des Zylinders können hierbei jede beliebige Querschnittsform aufweisen. Als kompressibles Medium kann z.B. Gummi, Silikon oder Kunststoffschaum Anwendung finden.

Der Befestigungsbereich kann als Klipp, als mit Eingriffsprofilen versehener Lagerbereich, als Profil- oder Gewindebolzen, als Teil eines Bajonett-Verschlusses oder als Schiebelager ausgebildet sein.

Der Anschlagkörper kann beispielsweise aus mindestens drei sternförmig angeordneten, an der Stirnseite mit einer Rundung versehenen Stegen bestehen. Es bestehen jedoch auch andere konstruktive Ausführungsmöglichkeiten des Anschlagkörpers, beispielsweise als stirnseitig abgerundeter Zapfen, als in weichem, federnden Werkstoff eingebetteter harter Werkstoff oder Gleitkörper oder als Profilelement.

Alternativ besteht auch die Möglichkeit, dass der Kolben des Grundkörpers mit dem Befestigungsbereich versehen ist, wobei dann der Boden des Zylinders den Anschlagbereich aufweist.

Zum Einbringen des z.B. aus Kunststoffschaum bestehenden kompressiblen Mediums in den Innenraum des Zylinders kann mindestens eine Ausnehmung in der Umfangswand des Zylinders der Kolbenzylindereinheit vorgesehen sein.

Vorteilhafte Weiterbildungen ergeben sich aus den Unteransprüchen.

Die Erfindung wird nachfolgend anhand von in der Zeichnung dargestellten Ausführungsbeispielen näher beschrieben. In der Zeichnung zeigen:
- Fig. 1: eine Seitenansicht einer Ausführungsform des erfindungsgemäßen Verbindungselements;
- Fig. 2: eine Vorderansicht, insbesondere des Anschlagbereichs;
- Fig. 3: das Verbindungselement nach Fig. 1 in gedrehter Seitenansicht im montierten Zustand;
- Fig. 4: einen Schnitt nach der Linie IV-IV in Fig. 1;
- Fig. 5 und 6: zwei perspektivische Ansichten des Verbindungselements nach Fig. 1;
- Fig. 7: eine andere Ausführungsmöglichkeit der Gestaltung des Befestigungsbereichs als Klipp, teils gebrochen;
- Fig. 8 und 9: eine weitere Ausführungsmöglichkeit der Gestaltung des Befestigungsbereich in Seitenansicht, teils gedreht;
- Fig. 10: die Ausführungsform nach Fig. 8 und 9 in perspektivischer Darstellung.

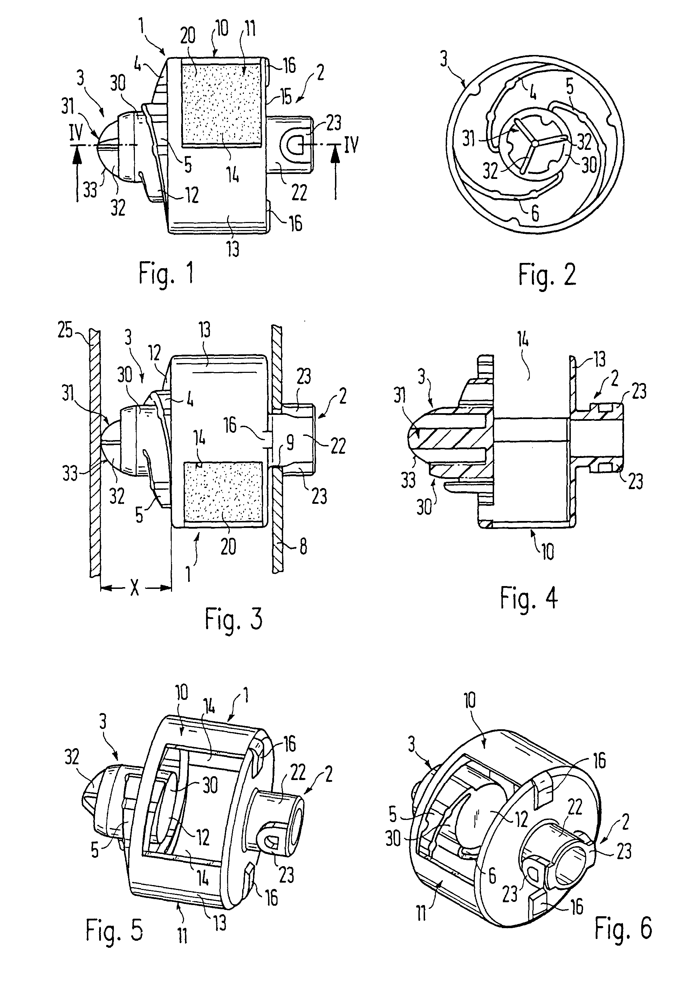

In den Fig. 1 bis 6 ist ein Verbindungselement 1 aus Kunststoff dargestellt, welches im Wesentlichen aus einem Befestigungsbereich 2 und einem Anschlagbereich 3 besteht. Der Anschlagbereich 3 ist über mehrere, beispielsweise über drei Arme 4, 5, 6 mit einem mit dem Befestigungsbereich 2 versehenen Grundkörper 10 verbunden. Die Arme 4, 5, 6 sind nach Fig. 2 spiralförmig gestaltet und elastisch.

Es besteht auch die Möglichkeit, zwei oder eine Vielzahl von spiralförmig gestalteten Armen vorzusehen.

Der Grundkörper 10 ist als eine mit einem kompressiblen Medium 20 gefüllte Kolbenzylindereinheit 11 ausgebildet. Hierbei ist der Anschlagbereich 3 Teil des Kolbens 12 der Kolbenzylindereinheit und ragt, wie insbesondere aus Fig. 1 und 3 erkennbar, über den Zylinder 13 hinaus.

Der Befestigungsbereich 2 ist vorzugsweise am Boden 15 des Zylinders 13 angeordnet.

Bei dem Ausführungsbeispiel nach Fig. 1 bis 6 ist der Befestigungsbereich 2 als mit Eingriffsprofilen 23 versehener Lagerbereich 22 gestaltet.

Der Anschlagbereich 3 besteht insbesondere gemäß Fig. 3, 4 und 5 aus einem zylinderförmigen Lagerkörper 30 und einem stirnseitig daran angeordneten Anschlagkörper 31. Der Lagerkörper 30 ist über die elastischen Arme 4, 5, 6 mit dem Kolben 12 der Kolbenzylindereinheit 11 verbunden oder ist - wie im vorliegenden Ausführungsbeispiel - selbst Teil des Kolbens 12. Hierbei kann der Anschlagkörper 31 gemäß Fig. 2 aus mindestens drei sternförmig angeordneten, an der Stirnseite mit einer Rundung 33 versehenen Stegen 32 bestehen.

In nicht näher dargestellter Ausführungsmöglichkeit kann der Lagerkörper 30 aus einem weichen, federnden Werkstoff bestehen. In diesem ist ein Gleitkörper, z.B. eine Kugel, eingebettet. Statt der Kugel kann als Anschlagkörper auch ein harter Werkstoff Anwendung finden.

Insbesondere aus den Fig. 1, 3 und 4 geht hervor, dass der Zylinder 13 der Kolbenzylindereinheit 11 mit einander gegenüberliegenden Ausnehmungen 14 in der Umfangswand des Zylinders 13 versehen ist. Durch diese Ausnehmungen 14 ist es möglich, das kompressible Medium, welches z.B. ein Kunststoffschaum ist, in den Zylinder 13 der Kolbenzylindereinheit 11 einzubringen. Die Form der Oberfläche ergibt sich hierbei aus dem Aufschäumen oder durch entsprechende werkzeugseitige Ausbildung.

Statt zweier Ausnehmungen 14 kann auch lediglich eine Ausnehmung vorhanden sein. Die Ausnehmungen können auch ganz entfallen, wenn das kompressible Medium stirnseitig zwischen den elastischen Armen 4, 5, 6 eingebracht wird.

Gemäß Fig. 3 besteht nun die Möglichkeit, das erfindungsgemäße Verbindungselement 1 in eine beispielsweise langloch- bzw. schlüssellochartige Öffnung 9 eines Trägers 8, beispielsweise einer Kraftfahrzeugkarosserie, einzusetzen und durch Verdrehen so in der Öffnung 9 zu haltern, dass ein sicherer Sitz gewährleistet ist.

Nunmehr lässt sich eine Verkleidung 25 gegen die Rundung 33 des Anschlagkörpers 31 anlegen und über den Anschlagbereich 3 funktionsrichtig positionieren, so dass beispielsweise im Kraftfahrzeuginnenraum ein unerwünschter Abstand zwischen einzelnen Teilen vermieden wird. Die Verkleidung 25 liegt funktionsrichtig am Anschlagbereich 3 an und erfährt eine gute Unterstützung.

Der Bereich X zeigt hierbei die Möglichkeit, innerhalb welcher die Verkleidungsplatte 25 im Hinblick auf den Träger 8 positioniert werden kann. Es ergibt sich damit ein weiter Bereich zum Toleranzausgleich.

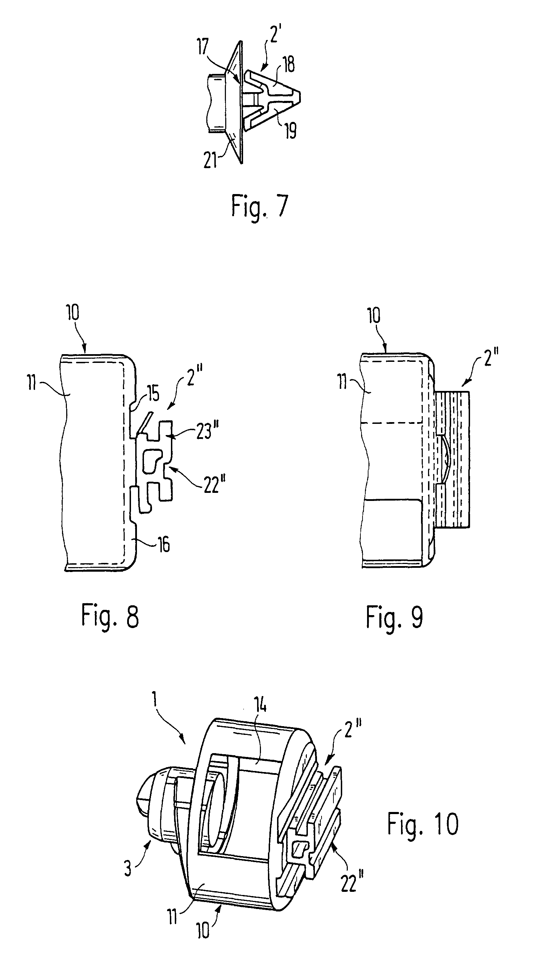

Es besteht auch die Möglichkeit, den Befestigungsbereich anders zu gestalten, wie aus den Fig. 7 bis 10 zu entnehmen ist. Fig. 7 zeigt einen Befestigungsbereich 2', welcher beispielsweise als Klipp 17 mit einander gegenüberliegenden federnden Armen 18 und 19 und Dichtungslippe 21 gestaltet ist.

Eine andere Variante ist in den Fig. 8, 9 und 10 dargestellt. Hier liegt ein in etwa rechteckförmiger Lagerbereich 22'' mit Eingriffsprofilen 23'' vor, welche entweder starr und/oder federnd gestaltet sein können. Damit lässt sich dieser Befestigungsbereich 2'' in eine entsprechende Öffnung eines Trägers 8 einsetzen und dort funktionssicher haltern.

Der Befestigungsbereich 2, 2' oder 2'' ist vorzugsweise am Boden 15 des Zylinders 13 der Kolbenzylindereinheit 11 angeordnet. Gemäß Fig. 1 bis 6 besteht die Möglichkeit, dass der Boden 15 des Zylinders 2 einander gegenüberliegende Anschlagnocken 16 aufweist, gegen welche sich der Träger 8 anlegen kann. Hierdurch werden evtl. Unebenheiten an einer Fläche des Trägers 8 ausgeglichen und eine Sicherung gegen unbeabsichtigtes Lösen bewirkt.

Durch die vorliegende Erfindung wird ein Verbindungselement geschaffen, welches infolge des Einsatzes mindestens eines elastischen spiralförmigen Arms einen guten Toleranzausgleich in der Ebene des Trägers 8 ermöglicht. Darüber hinaus ist infolge der Gestaltung des Grundkörpers als Kolbenzylindereinheit, dessen Innenraum mit kompressiblem Medium gefüllt ist, ein Toleranzausgleich senkrecht zu dem Träger 8 über einen weiten Bereich X nach Fig. 3 möglich.

Hierdurch ergibt sich ein einfach gestaltetes, jedoch vielseitig anwendbares Verbindungselement, insbesondere infolge der vielfach möglichen Gestaltungen des Befestigungsbereichs 2 und des Anschlag- bzw. Haltebereichs 3, welche jeweils mit dem als Kolbenzylindereinheit 11 ausgebildeten Grundkörper 10 zusammenwirken.

## Patentansprüche

1. Verbindungselement aus Kunststoff mit einem mit einem Träger (8), inbesondere einer Kraftfahrzeugkarosserie, zu verbindenden Befestigungsbereich (2, 2', 2'') und einem Anschlag- und/oder Haltebereich (3), wobei der Anschlagbereich (3) über mehrere, über den Umfang verteilte, elastische Arme (4, 5, 6) mit einem mit dem Befestigungsbereich versehenen Grundkörper (10) verbunden ist,
**dadurch gekennzeichnet,**
**dass** der Grundkörper (10) als mit einem kompressiblen Medium (20) gefüllte Kolbenzylindereinheit (11) ausgebildet ist,
**dass** der Anschlag bereich (3) Teil des Kolbens (12) ist und über den Zylinder (13) hinausragt und
**dass** der Anschlagbereich (3) aus einem zylinderförmigen Lagerkörper (30) und einem stirnseitig daran angeordneten Anschlagkörper (31) besteht, wobei der Lagerkörper (30) über die elastischen Arme (4, 5, 6) mit dem Kolben (12) oder Zylinder der Kolbenzylindereinheit (11) verbunden ist.

2. Verbindungselement nach Anspruch 1,
**dadurch gekennzeichnet,**
**dass** der Befestigungsbereich (2, 2', 2'') am Boden (15) des Zylinders (13) angeordnet ist.

3. Verbindungselement nach Anspruch 2,
**dadurch gekennzeichnet,**
**dass** der Befestigungsbereich (2, 2', 2'') als Klipp (17), als mit Eingriffsprofilen (23, 23'') versehener Lagerbereich (22, 22''), als Profil- oder Gewindebolzen, als Teil eines Bajonett-Verschlusses oder als Schiebelager ausgebildet ist.

4. Verbindungselement nach Anspruch 3,
**dadurch gekennzeichnet,**
**dass** der Anschlagkörper (31) aus mindestens drei sternförmig angeordneten, an der Stirnseite mit einer Rundung (33) versehenen Stegen (32) besteht.

5. Verbindungselement nach Anspruch 3,
**dadurch gekennzeichnet,**
**dass** der Anschlagkörper als Gleitkörper oder als Element aus hartem Werkstoff besteht, welcher oder welches mit dem aus weichem, federnden Material bestehenden Lagerkörper verbunden ist.

6. Verbindungselement nach einem der vorhergehenden Ansprüche,
**dadurch gekennzeichnet,**
**dass** der Boden (15) des Zylinders (13) mit mindestens einem Anschlagnocken (16) versehen ist.

7. Verbindungselement nach Anspruch 5,
**dadurch gekennzeichnet,**
**dass** am Boden (15) des Zylinders (13) zwei einander gegenüberliegende Anschlagnocken (16) angeordnet sind.

8. Verbindungselement nach einem oder mehreren der vorhergehenden Ansprüche,
**dadurch gekennzeichnet,**
**dass** der Zylinder (13) der Kolbenzylindereinheit (11) mit mindestens einer Ausnehmung (14) in seiner Umfangswand versehen ist.

9. Verbindungselement nach Anspruch 8,
**gekennzeichnet durch**
zwei einander gegenüberliegende Ausnehmungen (14) in der Umfangswand des Zylinders (13).

10. Verbindungselement nach Anspruch 7 oder 8,
**dadurch gekennzeichnet,**
**dass** das in dem Zylinder (13) angeordnete kompressible Medium Gummi, Silikon oder Kunststoffschaum ist.

## Claims

1. Plastic connecting element having a fastening region (2, 2', 2'') which is to be connected to a support (8), in particular to a motor-vehicle body, and a stop and/or retaining region (3), where the stop region (3) is connected via a plurality of elastic arms (4, 5, 6) distributed over the circumference to a base body (10) provided with the fastening region, **characterized in that** the base body (10) is designed as a piston-cylinder unit (11) which is filled with a compressible medium (20), **in that** the stop region (3) is part of the piston (12) and protrudes over the cylinder (13), and **in that** the stop region (3) comprises a cylindrical bearing body (30) and a stop body (31) arranged on the end side of the said bearing body, the bearing body (30) being connected via the elastic arms (4, 5, 6) to the piston (12) or cylinder of the piston-cylinder unit (11).

2. Connecting element according to Claim 1, **characterized in that** the fastening region (2, 2', 2'') is arranged on the bottom (15) of the cylinder (13).

3. Connecting element according to Claim 2, **characterized in that** the fastening region (2, 2', 2'') is designed as a clip (17), as a bearing region (22, 22'') provided with engagement profiles (23, 23''), as a profiled or threaded bolt, as part of a bayonet fastener or as a sliding bearing.

4. Connecting element according to Claim 3, **characterized in that** the stop body (31) comprises at least three webs (32) which are arranged in the shape of a star and are provided with a rounded section (33) on the end side.

5. Connecting element according to Claim 3, **characterized in that** the stop body is a sliding body or an element made of hard material, which sliding body or element is connected to the bearing body consisting of soft, resilient material.

6. Connecting element according to one of the preceding claims, **characterized in that** the bottom (15) of the cylinder (13) is provided with at least one stop projection (16).

7. Connecting element according to Claim 5, **characterized in that** two mutually opposite stop projections (16) are arranged on the bottom (15) of the cylinder (13).

8. Connecting element according to one or more of the preceding claims, **characterized in that** the cylinder (13) of the piston-cylinder unit (11) is provided with at least one recess (14) in its circumferential wall.

9. Connecting element according to Claim 8, **characterized by** two mutually opposite recesses (14) in the circumferential wall of the cylinder (13).

10. Connecting element according to Claim 7 or 8, **characterized in that** the compressible medium which is arranged in the cylinder (13) is rubber, silicone or plastic foam.

## Revendications

1. Elément de liaison en matière plastique, comprenant une zone de fixation (2, 2', 2'') devant être reliée à un support (8), en particulier une carrosserie de véhicule automobile, et une zone (3) de butée et/ou de retenue, ladite zone de butée (3) étant reliée, par l'intermédiaire de plusieurs bras élastiques (4, 5, 6) répartis sur le pourtour, à un corps de base (10) pourvu de la zone de fixation,
**caractérisé par le fait**
**que** le corps de base (10) est réalisé sous la forme d'un vérin (11) empli d'une substance compressible (20) ;
par le fait que la zone de butée (3) fait partie du piston (12) et dépasse au-delà du cylindre (13) ; et
par le fait que la zone de butée (3) se compose d'un corps cylindrique de portée (30) et d'un corps de butée (31) disposé à la face extrême de ce dernier, ledit corps de portée (30) étant relié, par l'intermédiaire des bras élastiques (4, 5, 6), au piston (12) ou au cylindre du vérin (11).

2. Elément de liaison selon la revendication 1,
**caractérisé par le fait**
**que** la zone de fixation (2, 2', 2'') est disposée au fond (15) du cylindre (13).

3. Elément de liaison selon la revendication 2,
**caractérisé par le fait**
**que** la zone de fixation (2, 2', 2'') est réalisée sous la forme d'une pièce encliquetable (17), d'une zone de montage (22, 22'') munie de profils (23, 23'') de venue en prise, d'un tenon profilé ou fileté, d'une partie d'une solidarisation du type baïonnette, ou d'un coussinet.

4. Elément de liaison selon la revendication 3,
**caractérisé par le fait**
**que** le corps de butée (31) se compose d'au moins trois membrures (32) agencées en étoile, dotées d'un arrondi (33) à la face extrême.

5. Elément de liaison selon la revendication 3,
**caractérisé par le fait**
**que** le corps de butée est constitué d'un corps coulissant ou d'un élément en un matériau dur, relié au corps de portée consistant en un matériau élastique tendre.

6. Elément de liaison selon l'une des revendications précédentes,
**caractérisé par le fait**
**que** le fond (15) du cylindre (13) est muni d'au moins un ergot d'arrêt (16).

7. Elément de liaison selon la revendication 5,
**caractérisé par le fait**
**que** deux ergots d'arrêt (16) mutuellement opposés se trouvent sur le fond (15) du cylindre (13).

8. Elément de liaison selon l'une ou plusieurs des revendications précédentes,
**caractérisé par le fait**
**que** le cylindre (13) du vérin (11) est pourvu d'au moins un évidement (14) dans sa paroi périphérique.

9. Elément de liaison selon la revendication 8,
**caractérisé par**
deux évidements (14) opposés l'un à l'autre dans la paroi périphérique du cylindre (13).

10. Elément de liaison selon la revendication 7 ou 8,
**caractérisé par le fait**
**que** la substance compressible logée dans le cylindre (13) est du caoutchouc, du silicone ou une mousse de matière plastique.
